**Europäisches Patentamt**

**European Patent Office**

**Office européen des brevets**

(19)

(11) Veröffentlichungsnummer : **0 314 998 B1**

(12) **EUROPÄISCHE PATENTSCHRIFT**

(45) Veröffentlichungstag der Patentschrift :
12.06.91 Patentblatt 91/24

(51) Int. Cl.⁵ : **B65D 90/22, F16J 13/00**

(21) Anmeldenummer : **88117579.8**

(22) Anmeldetag : **21.10.88**

(54) Behälter.

(30) Priorität : **04.11.87 DE 8714700 U**

(43) Veröffentlichungstag der Anmeldung :
**10.05.89 Patentblatt 89/19**

(45) Bekanntmachung des Hinweises auf die
Patenterteilung :
**12.06.91 Patentblatt 91/24**

(84) Benannte Vertragsstaaten :
**AT BE CH DE ES FR GB GR IT LI LU NL SE**

(56) Entgegenhaltungen :
**DE-A- 3 121 339**
**FR-A- 2 015 770**
**FR-A- 2 581 627**
**GB-A- 2 069 654**
**GB-A- 2 083 160**
**US-A- 1 874 414**
**US-A- 2 274 319**
**US-A- 3 086 675**

(73) Patentinhaber : **EDELHOFF POLYTECHNIK
GMBH & CO.
Heckenkamp 31
W-5860 Iserlohn 5 (DE)**

(72) Erfinder : **Brosch, Wilfried
Bochumer Strasse 149
W-4690 Herne 1 (DE)**

(74) Vertreter : **Lorenz, Eduard et al
Rechtsanwälte Eduard Lorenz - Bernhard
Seidler Margrit Seidler - Dipl.-Ing. Hans-K.
Gossel Dr. Ina Philipps - Dr. Paul B. Schäuble
Dr. Siegfried Jackermeier
Wipl.-Ing. Armin Zinnecker
Widenmayerstrasse 23 D-8000 München 22
(DE)**

**Beschreibung**

Die Erfindung betrifft einen Behälter der im Oberbegriff des Patentanspruchs 1 angegebenen Art.

Quader- oder würfelförmige Behälter, die in der Praxis kubische Tankcontainer, Intermediate Bulk Carrier oder ähnlich genannt werden, dienen zum Einsammeln, Speichern und Transportieren flüssiger und teigiger Abfallstoffe, aber auch Feststoffe oder verunreinigter Feststoffe oder brennbarer und/oder wassergefährdender Produkte oder mit diesen verunreinigter Putz- oder Reinigungsmittel. Bei solchen, beispielsweise aus der DE-OS 34 32 830 bekannten Behältern wird der Deckel auf der Behälteroberseite mittels um den Deckelumfang verteilter Knebelschrauben auf einen Dichtsitz gepreßt. Nach Lösen und Wegklappen der Knebelschrauben ist der Deckel um ein Scharnier hochklappbar. Der Behälter kann von einem praktisch unbegrenzten Personenkreis ohne besondere Sorgfalt benutzt werden, obwohl er für die Benutzer und die Umwelt akut gefährlich sein kann. Der Deckel kann am Dichtsitz anhaften oder festkleben. Durch Wärmeeinfluß oder aufgrund anderer Einflüsse entsteht häufig im Inneren des Behälter ein Über- oder ein Unterdruck. Bei Überdruck im Behälter und festgeklebtem Deckel kann der Deckel nach Lösen der Befestigungselemente plötzlich auffliegen oder können schädliche Stoffe unkontrollierbar austreten. Bei Unterdruck und/oder festgeklebtem Deckel läßt sich dieser nach Lösen der Befestigungselemente nicht ohne Hilfsmittel öffnen, was das Befüllen verhindert und bei Manipulieren mit ungeeigneten Hilfsmitteln Beschädigungen im Abdichtbereich hervorruft oder bei Funkenbildung und brennbarem Behälterinhalt eine gefährliche Entzündung zuläßt. Beschädigungen im Deckelbereich führen beim späteren Transport des befüllten Behälters zum umweltgefährdenden Austritt von Abfallstoffen.

Bei einem aus der US-A-22 74 319 bekannten Behälter ist die Sicherungsvorrichtung für den Deckel in eine das Befestigungsmittel zum Andrücken des Deckels bildende Knebelschraube integriert. Auf der Knebelschraube ist eine im Querschnitt H-förmige Hülse verschraubbar, die in ein gabelförmiges Maul eines den Behälter oberseitig überspannenden Verschlußbügels eingreift. Mittels der Hülse läßt sich der Deckel zum Abbauen von Überdruck langsam öffnen bzw. zum Lösen einer festgeklebten Dichtung oder bei Unterdruck im Behälter anheben, ehe die Knebelschraube abgeklappt und der Deckel vollständig geöffnet wird. Allerdings setzt die angestrebte Sicherheitswirkung die ordnungsgemäße Bedienung der Sicherungsvorrichtung voraus. Wird die Hülse bei festgeklebtem Deckel oder bei Unterdruck ohne Sorgfalt rasch gelöst und die Knebelschraube abgeklappt, dann kann der Deckel unvermutet auffliegen bzw. besteht keine Möglichkeit mehr, den durch den Unterdruck oder die festgeklebte Dichtung geschlossenen Deckel zu öffnen, denn das am Verschlußbügel angeordnete Fußpedal kann die dazu erforderlichen Kräfte nicht aufbringen. Diese indirekte Sicherheit erbringt keinen zufriedenstellenden bzw. ausreichenden Schutz für den diesen Behälter handhabenden Personenkreis.

Bei einem aus der US-A-30 86 675 bekannten Behälter ist mit der Verschlußeinrichtung des Deckels eine Sicherungsvorrichtung vereinigt, die durch manuelles Drehen des ganzen Deckels auf dem Sitz betätigt werden muß, ehe sich der Deckel abheben läßt. Wenngleich so ein Überdruck im Behälter zuverlässig abgebaut wird, ehe sich der Deckel öffnen läßt, ist bei festgeklebtem Deckel oder einem Unterdruck im Behälter das Öffnen des Deckels nicht mehr möglich. Dieses Prinzip ist ferner für große Deckel wegen der zu deren Drehung hohen notwendigen Kraft für Abfallsammelbehälter nicht brauchbar.

Bei einem aus der GB-A-20 83 160 bekannten Behälter wird der Deckel durch einen klappbaren Verschlußbügel über Federn niedergedrückt. Der Verschlußbügel hat einen Arretiermechanismus, der bei Überdruck im Behälter ein Entspannen der Federn zum Abbauen des Überdrucks enthält. Der Arretiermechanismus läßt sich jedoch bei unsachgemäßer und rascher Betätigung überlisten, so daß der Deckel dann rasch auffliegt. Bei einem Unterdruck im Behälter besteht keine Möglichkeit, den Deckel zu öffnen.

Bei einem aus der US-A-18 74 414 bekannten Behälter sind im Deckel bzw. Deckeldom Ventileinrichtungen vorgesehen, die das Be- und Entlüften des Behälterinneren vor dem Öffnen des Deckels gestatten. Dies setzt jedoch genaue Kenntnis der Funktion der Ventileinrichtungen voraus.

Bei einem aus der FR-A-25 81 627 bekannten Behälter sind mehrere Hebelverschlüsse vorgesehen, die sich bei unsachgemäßer Betätigung überlisten lassen.

Bei einem aus der GB-A-20 69 654 bekannten Behälter ist auf dem Deckel ein Drehkreuz angeordnet, das bei Überdruck im Behälter den Deckel vor dem Öffnen anlüftet. Maßnahmen, die bei festklebender Dichtung oder bei einem Unterdruck eine einfache Bedienung gestatten, sind nicht vorgesehen.

Bei einem aus der DE-A1-31 21 339 bekannten Behälter ist ein Getriebe zum Verdrehen des Deckels vorgesehen, der mit dem Deckeldom nach Art eines Dampfdruck-Kochtopf-Bajonettverschlusses zusammenarbeitet.

Der Erfindung liegt die Aufgabe zugrunde, einen Behälter der eingangs genannten Art zu schaffen, bei dem die Sicherheit für den Benutzer des Behälters, für unbeteiligte Personen und für die Umwelt höher ist als bei den bekannten.

Die gestellte Aufgabe wird erfindungsgemäß durch die im kennzeichnenden Teil des Patentanspruchs 1 angegebenen Merkmale gelöst.

Bei dieser Ausbildung ist die Anlüftvorrichtung sozusagen eine Zwangsanlüftvorrichtung, die beim Manipulieren mit dem Behälter zwangsweise eine bestimmte Schrittfolge beim Öffnen und Schließen vorschreibt, durch die der Benutzer des Behälters vor Schaden bewahrt und von einer unzulässigen Manipulation abgehalten wird. Bei Unterdruck oder bei festgeklebtem Deckel zeigt die Verstellsperre spürbar an, daß ein gefährlicher Zustand vorliegt und vor dem Öffnen des Deckels behoben werden muß. Der Benutzer kann diesen Zustand nur dadurch beseitigen, daß er die Verstellsperre durch Betätigen der Belüftungsvorrichtung löst, um die Sicherungsvorrichtung in die Deckellösestellung bringen zu können. Bei festgeklebtem Deckel und Überdruck bestünde nämlich die Gefahr, daß der Benutzer die Sicherungsvorrichtung in der Annahme, der Behälter sei drucklos, in die Deckellösestellung bewegt, in der der Deckel unvermutet auffliegen und den Benutzer verletzen bzw. gefährlicher Inhalt austreten könnte. Dies kann aber deshalb nicht eintreten, weil der Benutzer dank der Verstellsperre dazu gezwungen wird, die Belüftungseinrichtung vorgreifend zum Bewegen der Sicherungsvorrichtung in die Deckellösestellung zu betätigen, so daß Über- und Unterdruck abgebaut wird. Die Anlüftvorrichtung wird dann in üblicher Weise dazu eingesetzt, den festgeklebten Deckel soweit zu lösen, daß er sich in der Deckellösestellung der Sicherungsvorrichtung problemlos ohne gefährliche Hilfsmittel lösen läßt. Die Bedienung ist für den Benutzer einfach, obwohl er wegen der Verstellsperre zu einer Mindestsorgfalt gezwungen wird, die jedoch zu seiner Sicherheit beiträgt.

Eine zweckmäßige Ausführungsform geht aus Anspruch 2 hervor. Als Auslöser für das Wirksamwerden der Stellsperre wird die Zusammendrückung der Dichtung benutzt, weil dieser Zustand auf eine potentielle Gefährdung des Benutzers oder auf eine Fehlbedienung hinweist. Ist die Dichtung aufgrund der noch angezogenen Befestigungselemente zusammengedrückt, so darf der Benutzer die Sicherungsvorrichtung noch nicht in die Deckellösestellung bringen dürfen, weil er zu diesem Zeitpunkt noch nicht wissen kann, ob Über- oder Unterdruck herrscht. Ist die Dichtung hingegen aufgrund Unterdrucks zusammengedrückt, muß dieser Unterdruck zunächst abgebaut werden, damit der Benutzer gar nicht in die Verlegenheit kommt, mit Hilfsmitteln den nicht zu lösenden Deckel aufzuheben. Ist schließlich der Deckel aus einem anderen Grund festgeklebt, so müssen ebenfalls erst bestimmte Schritte vorgenommen werden, die der Sicherheit des Benutzers dienen, damit dieser nicht durch einen dann erst zu spät festgestellten Überdruck gefährdet oder dazu veranlaßt wird, mit falschen Hilfsmitteln den Deckel anzuheben. Stets sorgt die Sicherungsvorrichtung mittels der Verstellsperre dafür, daß der Benutzer vor dem eigentlichen Öffnungsvorgang gezwungen wird,

die Störungen zu beseitigen, wobei zweckmäßigerweise die Sicherungsvorrichtung selbst zur Beseitigung benutzt wird. Der Benutzer wird gezwungen, die zu seiner Sicherheit vorgesehene Schrittfolge genau einzuhalten.

Auf baulich einfache Weise wird bei der Ausführungsform gemäß Anspruch 3 die vorerwähnte Sicherungswirkung durch die in Eingriff stehenden Eingriffs- und Gegeneingriffselemente der Sicherungsvorrichtung erbracht.

Eine baulich einfache und funktionssichere Ausführungsform geht aus Anspruch 4 hervor. Der Vorsprung mit der damit zusammenarbeitenden Kulissenführung sind verschleißarme und formschlüssig zusammenwirkende Komponenten, die der bei solchen Behältern nicht auszuschließenden groben Behandlung zuverlässig gewachsen sind. Der Vorsprung und die Führungskulisse sind zudem in der Lage, ausreichend große Kräfte und die notwendigen Hübe aufzubringen.

Ein weiterer, besonders wichtiger Gedanke ist ferner in Anspruch 5 enthalten. Der Freistellungsabschnitt trägt der Hubbewegung des Deckels zwischen seiner losen Auflage auf der Dichtung und dem Setzen unter Unterdruck oder nach Anziehen der Befestigungselemente Sorge. Mittels des Freistellungsraums wird der Vorsprung in der ordnungsgemäßen Schließstellung des Deckels von den Niederhaltekräften freigestellt. Die Anschlagfläche verhindert dabei in gewünschter Weise, daß die Sicherungsvorrichtung unter Abweichen von der vorbestimmten Schrittfolge beim Öffnen schon verstellt wird, ehe die Befestigungsgelement gelöst werden.

Eine weitere, vorteilhafte Ausführungsform geht aus Anspruch 6 hervor. Mittels des ersten Anlüftabschnittes wird bei angehaftetem Deckel oder Unterdruck im Behälterinneren der Deckel angelüftet, bis der Unterdruck abgebaut und/oder die Haftung des Deckels beseitigt sind, so daß die weiteren, vorbestimmten Schritte zum Öffnen des Deckels ablaufen können. Die Schräge des Anlüftabschnittes läßt sich auf einfache Weise so auslegen, daß auch bei einem großen Deckel mit geringem Aufwand die notwendige Kraft zum Anlüften des Deckels erzeugt wird.

Ein weiterer, zweckmäßiger Gedanke ist in Anspruch 7 enthalten. Der zweite schräge Anlüftabschnitt dient dazu, bei Überdruck im Behälter oder bei starker Vorspannung der Dichtung den Deckel gezielt und langsam so anzulüften, daß für den Benutzer keine Gefahr eintritt. Ehe der Deckel vollständig geöffnet werden kann, läßt sich der Überdruck abbauen bzw. wird das Aufspringen des Deckels unterdrückt, ohne daß dabei der Benutzer eine besondere Sorgfalt aufzubringen hätte. Allein durch die Verstellbewegung der Sicherungsvorrichtung beseitigt er diesen gefährlichen Zustand vor dem Öffnen des Deckels.

Baulich einfach werden die vorgenannten Ziele bei einer vorteilhaften Ausführungsform gemäß Anspruch 8 gelöst. Mit dem Drehteil läßt sich die Relativbewegung zwischen der Führungskulisse und dem Vorsprung besonders einfach verwirklichen. Die gewindeartigen Rippen sind einfach und präzise herstellbar und am Drehteil anbringbar.

Alternativ ist auch die Ausführungsform gemäß Anspruch 9 denkbar, wobei der Dreh-, Schmiede- oder Gußteil für eine sehr präzise Führung des Vorsprungs sorgt. Die Führungskulisse könnte bei beiden Ausführungsformen mit gleitfreudigen Beschichtungen für den Fortsatz versehen sein. Denkbar wäre es auch, den Fortsatz selbst mit einer gleitfreudigen und verschleißmindernden Ummantelung zu versehen.

Eine weitere Alternative ist in Anspruch 10 enthalten. Das Belüftungsventil ist zur Sicherheit vor der Verstellung der Sicherungsvorrichtung zu betätigen, um einen Überdruck oder Unterdruck im Behälter zumindest teilweise abzubauen und die Verstellsperre zu lösen, damit einer gefährlichen Situation von vorneherein vorgebaut wird.

Eine weitere, vorteilhafte Ausführungsform, bei der der Deckel ein runder oder ovaler Domdeckel ist, der an einem kragenartigen Domflansch mittels des Scharniers hochklappbar angebracht ist, geht aus Anspruch 11 hervor. Bei dieser Ausbildung der Sicherungsvorrichtung arbeitet diese in bezug auf das Scharnier mit einem günstig großen Hebelarm. Ist der Deckel schließlich zur Gänze geöffnet, beeinträchtigen die Komponenten der Sicherungsvorrichtung den Zugang zum Behälterinneren (zum Befüllen, zun Entleeren oder zum Reinigen) nicht mehr.

Alternativ dazu ist auch eine Ausführungsform zweckmäßig, bei der der Deckel ein runder oder ovaler Domdeckel ist, der an einem kragenartigen Domflansch mittels des Scharniers hochklappbar angebracht ist, und die sich aus Anspruch 12 ergibt. Bei dieser Anbringung sind außerhalb des Deckels keine störenden Komponenten vorhanden, weil die Sicherungsvorrichtung im wesentlichen innerhalb der Erstreckung des Deckels wirksam ist. Dies mindert auch die Gefahr, daß beim Transport oder Stapeln etwaige vorstehende Teile verbogen oder beschädigt werden könnten.

Vorteilhaft ist ferner die Ausführungsform gemäß Anspruch 13. Es läßt sich die Führungskulisse ohne weiteres mit Anschlägen ausbilden, die die Endstellungen des Handhebels eindeutig definieren. Die Federverrastung kann als additive oder alternative Möglichkeit zur Lagesicherung des Handhebels zumindest in der Sperrstellung benutzt werden, vor allem dann, wenn zum Anlüften bei einem Unterdruck oder bei festhaftendem Deckel die Sicherungsvorrichtung über die Sperrstellung hinauszubewegen ist. Anstelle des Handhebels könnte aber auch ein Servoantrieb, z.B. mit Fernsteuerung, zur Verstellung der Sicherungsvorrichtung vorgesehen sein.

Günstig ist auch die Maßnahme von Anspruch 14, weil die Servoeinrichtung den Bedienungskomfort für den Benutzer erhöht bzw. bei großen und schweren Deckeln verhindert, daß der Deckel hart auf den Dichtsitz aufschlägt. Die Servoeinrichtung kann auch für das Offenhalten des Deckels benutzt werden, was bei Wind oder Schräglage des Behälters die Sicherheit für den Benutzer erhöht.

Eine weitere zweckmäßige Ausführungsform, bei der der Deckel an einem Scharnier angeschlagen ist und jedes Befestigungselement als Knebelschraube an einem behälterfesten und an einem deckelfesten Widerlager angreift und zum weiten öffnen des Deckels von einem der Widerlager abklappbar ist, geht aus Anspruch 15 hervor. Diese bauliche Maßnahme zwingt den Benutzer zur Einhaltung einer vorbestimmten und seiner Sicherheit dienenden Schrittfolge beim Schließen des Deckels. Die Befestigungselemente lassen sich nämlich solange nicht ordnungsgemäß anbringen und anziehen, als die Sicherungsvorrichtung nicht im ersten Schritt in die Deckelsperrstellung gebracht worden ist und den Deckel zusammen mit dem Scharnier so weit auf die Dichtung preßt, daß die Knebelschrauben überhaupt hochgeklappt werden können. Zur Sicherheit des Benutzers trägt dies bei, weil sichergestellt ist, daß die Sicherungsvorrichtung für das nächste öffnen des Deckels wieder in der richtigen Stellung steht und nicht vom Benutzer bewußt oder unbewußt überlistet wurde.

Anhand der Zeichnung wird eine Ausführungsform des Erfindungsgegenstandes erläutert. Es zeigen :

Fig. 1 eine Seitenansicht eines Behälters,
Fig. 2 eine Draufsicht auf den Behälter von Fig. 1,
Fig. 3 ein Detail im Schnitt,
Fig. 4 eine erste Detailvariante, und
Fig. 5 eine zweite Detailvariante.

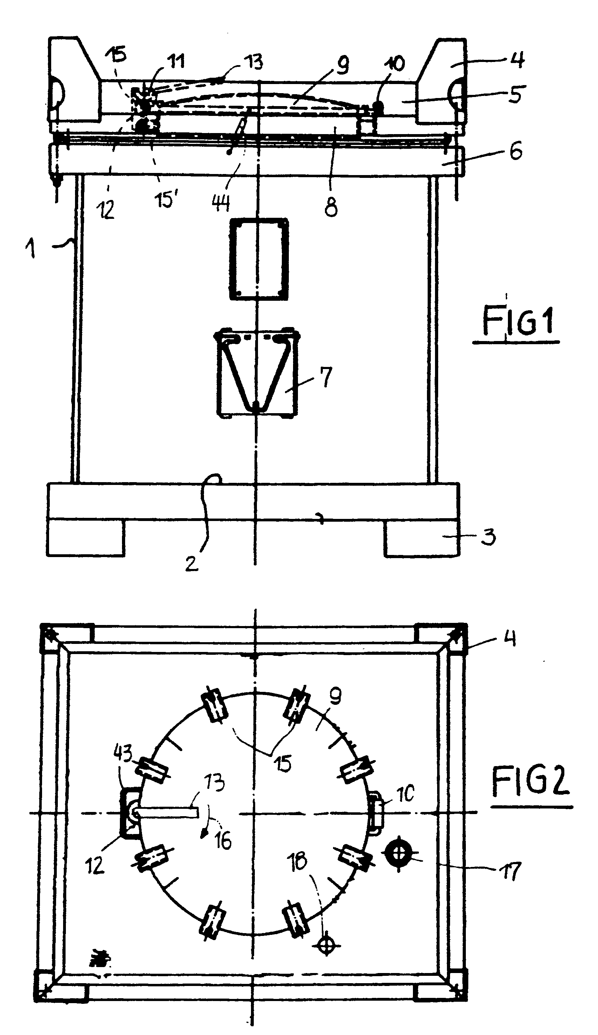

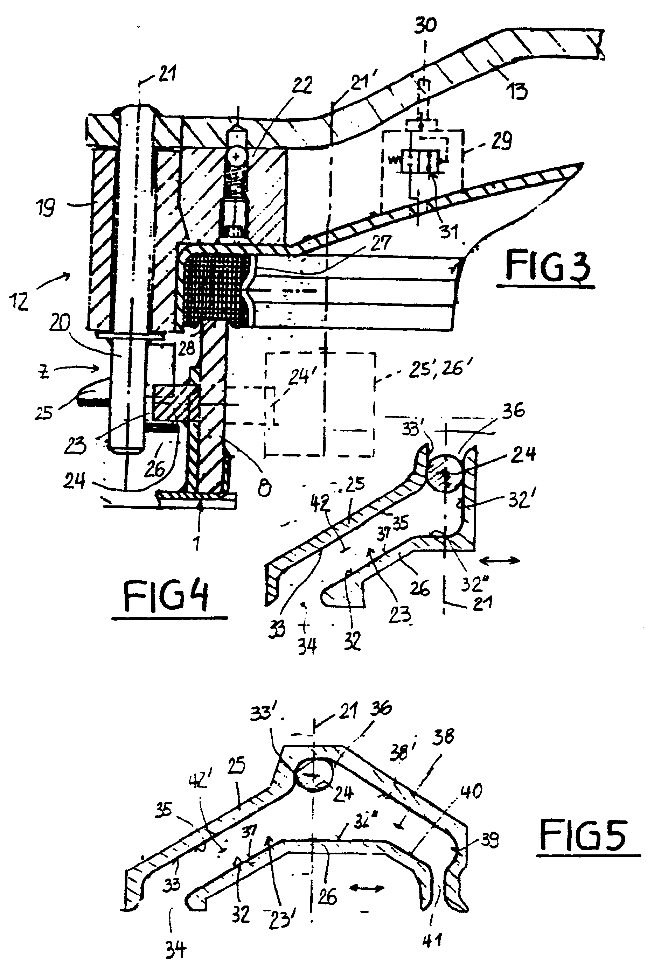

Ein Behälter 1, beispielsweise ein kubischer Tankcontainer mit einem Fassungsvermögen zwischen 0,25 und 3,0 m³, ist in einen Unterbaurahmen 2 mit Standfüßen bzw. Hubgabelösen 3 eingegliedert. Auf einem oberen Rahmenteil 5, der mit einem Versteifungsrahmen 6 verbunden ist, sind Stapelecken 4 aufgesetzt. An den Behälterseitenwänden sind Hubglieder 7 befestigt. In der Behälteroberseite ist ein kragenförmiger Domflansch 8 für einen daran mittels eines Scharniers 10 hochklappbaren Deckel 9 angeformt. Aus den Fig. 1 und 2 ist erkennbar, daß um den Deckelumfang mehrere Befestigungselemente 11 verteilt sind, hier zweckmäßigerweise Knebel-Spannschrauben, die an behälterfesten Widerlagern 15' abklappbar verankert sind und deckelfeste Widerlager 15 übergreifen können. Dem Scharnier 10 annähernd diametral gegenüberliegend ist eine Sicherungsvorrichtung 12 vorgesehen, die mit einem Handhebel 13 betätigbar ist, der beim öffnen und Schließen des Deckels 9 als Handhabe dient. Pfeil 16 deutet eine Betätigungseinrichtung des Handhebels 13 an. Ein Schutzbügel 43 am Domflansch 8 schirmt die Sicherungsvorrichtung 12 ab. Der Schutzbügel 43 könnte auch am Deckel .9 angebracht und eine zusätzliche Handhabe zum öffnen und Schließen sein. Eine Servoeinrichtung 44, z.B. ein Gasdruck- oder Federspeicherzylinder, dient zum leichteren öffnen des Deckels 9 bzw. als Anschlagdämpfer beim Schließen des Deckels und zum Offenhalten des Deckels, der zweckmäßigerweise um mehr als 90° hochgeklappt werden kann. Im Deckel 9 ist eine in Fig. 3 gezeigte elastische Dichtung 27 vorgesehen, die sich unter dem Druck der Befestigungselemente 11 elastisch verformen läßt. Das Scharnier 10 ist so ausgebildet, daß es eine Hubbewegung des Deckels beim Entspannen und Zusammenpressen der Dichtung 27 zuläßt. Außerdem ist das Scharnier so ausgelegt, daß es beim Schließen mit der Sicherungsvorrichtung 12 den Deckel um ca. 5mm in die Dichtung 27 drückt.

Fig. 2 zeigt ferner, daß in der Oberseite des Behälters beispielsweise ein Absauganschluß 17 und eine zusätzliche Hilfsarmatur 18, beispielsweise ein Ent- oder Belüftungsventil oder dgl. angebracht ist.

Die Sicherungsvorrichtung 12 (Fig. 3) bildet zusätzlich zu den Befestigungselementen 11 einen Verschluß für den Deckel 9, mit dem dieser bei teilweise komprimierter Dichtung 27 für normalen Gebrauch dicht verschlossen gehalten wird, so daß die Befestigungselemente 11 nur für den Transport anzubringen und anzuziehen sind.

Die Sicherungsvorrichtung 12, die wenigstens eine Zwangsanlüftvorrichtung Z für den Deckel 9 enthält, weist eine am Rand des Deckels 9 angebrachte Drehlagerung 19 für einen als Welle ausgebildeten Drehteil 20 mit parallel zur Deckelachse liegender Achse 21 auf. In der Drehlagerung 19 ist eine Kugelverrastung 22 für den mit dem Drehteil 20 verbundenen Handhebel 13 untergebracht, mit der dieser in zumindest einer Drehstellung lagesicherbar ist. Die Kugelverrastung 22 kann zum leichteren Auswechseln auch im Handhebel 13 angeordnet sein.

Am Drehteil 20 ist eine ein Gegenanschlagelement 23 bildende Führungskulisse für einen ein Anschlagelement 24 bildenden, an der Außenseite des Domflansches 8 befestigten Vorsprung vorgesehen. Die Führungskulisse ist als im Querschnitt U-förmige, etwa gewindegangartig verlaufende Nut ausgebildet und wird (Fig. 4) von quer zur öffnungsrichtung des Deckels 9 liegenden Führungsflächen 33, 37 begrenzt, die gewindegangartig verlaufenden Rippen 25, 26 auf dem Umfang des Drehteils 20 angehören.

Fig. 4 zeigt die Führungskulisse mit dem Vorsprung in einer Abwicklung des Umfangs des Drehteils 20. Die Führungskulisse besitzt an ihrem unteren Ende eine Austritts- und Fangöffnung 34, an die sich ein schräg ansteigender Zwangsanlüftabschnitt 42 anschließt, der von einer oberen schrägen Fläche 35 und einer unteren schrägen Fläche 32 begrenzt wird und zu einem Freistellungsabschnitt 36 führt, der in etwa in der Breite des Vorsprungs 24 parallel zur Achse 21 und damit in öffnungsrichtung des Deckels 9 verläuft. Der Freistellungsabschnitt 36 ist bei dieser Ausführungsform nach oben offen. An die Schrägfläche 32 schließt sich eine zur Drehachse 21 senkrechte Fläche 32" an, die in eine parallel zur Achse 21 verlaufende Anschlagfläche 32' übergeführt ist. Im Freistellungsabschnitt 36 ist ferner eine parallel zur Achse 21 verlaufende Anschlagfläche 33' vorgesehen, die die Schrägfläche 35 nach oben verlängert.

Die das Gegenanschlagelement 23 bildende Führungskulisse könnte auch in einem nicht-dargestellten und am Drehteil 20 befestigten oder mit ihm einstückig verbundenen Dreh-, Schmiede- oder Gußteil als in dessen Umfangsfläche verlaufende Nut ausgebildet sein, das üblicherweise mit gewichtsreduzierenden Aussparungen versehen ist.

Fig. 3 zeigt, daß der Domflansch 8 oberseitig einen ringförmigen Dichtsitz 28 für die Dichtung 27 bildet, mit der der Deckel 9 auf dem Domflansch 8 aufsitzt. Der Deckel 9 könnte auch so groß sein, daß er die ganze Behälteroberseite übergreift und am Außenrand des Behälters festgelegt wird.

In Fig. 3 ist ferner auf dem Deckel 9 strichliert ein Belüftungsventil 29 mit einem Betätigungsglied 30 angedeutet. Das Ventil ist beispielsweise ein 2/2-Wegeventil 31, das normalerweise in der Absperrstellung steht und bei Betätigung des Gliedes 30 auf Durchgang schaltet, so daß Über- oder Unterdruck im Behälterinneren ausgeglichen wird. Das Betätigungsglied 30 kann von Hand betätigt werden. Das Belüftungsventil 29 könnte ferner neben dem Deckel 9 direkt am Behälter 1 angeordnet sein.

In Fig. 3 ist strichliert als Alternative angedeutet, daß der Drehteil 20 innerhalb des Randes des Deckels 9 bei 21' drehbar gelagert sein könnte und mit Rippen 25', 26' mit dem dann im Inneren des Domflansches 8 angeordneten Anschlagelement 23' zusammenarbeitet.

Die Sicherungsvorrichtung 12 gemäß den Fig. 3 und 4 arbeitet wie folgt:

Unter der Annahme, daß der Deckel 9 durch Anziehen der Befestigungselemente 11 ordnungsgemäß verschlossen ist und der Handhebel 13 in der Deckelsperrstellung steht, wobei die Dichtung 27 soweit zusammengedrückt ist, daß das Anschlagelement 24 im Freistellungsbereich 36 steht, hat der Benutzer zum öffnen des Deckels 9 zunächst zwangsweise als ersten Schritt die Befestigungselemente 11 zu lösen, bis sich die Dichtung 27 entspannt. Der Deckel 9 wird dabei im Scharnier 10 soweit angehoben, daß das Anschlagelement 24 bis nahe an die Fläche 32" verlagert wird. Zuvor ist es dem Benutzer nicht möglich, den Handhebel 13 zu verdrehen, weil das Anschlagelement 24 zwischen den Anschlagflächen 33' und 32' in einer Verstellsperre blockiert ist. Herrscht im Behälter 1 Unterdruck, so entspannt sich die Dichtung 27 nicht, und der Benutzer muß das Ventil 29 betätigen, um den Unterdruck abzubauen. Erst dann läßt sich der Handhebel 13 verdrehen, bis das Anschlagelement 24 gegen die Schrägfläche 35 anläuft und den Deckel 9 allmählich hebt. Herrscht Überdruck im Behälterinneren, so wird er durch das Anlüften langsam abgebaut. Der Benutzer kann den Handhebel 13 jederzeit wieder in die Deckelsperrstellung zurückdrehen, wenn ihm der entweichende Überdruck gefährlich erscheint. Bewegt er den Handhebel 13 weiter in Richtung auf die Deckellösestellung zu, so gelangt das Anschlagelement 24 schließlich in den Bereich der Austritts- und Fangöffnung 34. Bis dahin ist jeglicher Überdruck im Behälterinneren abgebaut. Sofern zuvor die Befestigungselemente 11 vom Deckel 9 vollständig gelöst wurden, kann der Deckel 9 mittels des Handhebels 13 angehoben werden.

Die Wirklänge der Befestigungselemente 11 ist kleiner als der Abstand zwischen den Widerlagern 15 und 15′ bei vollständig entspannter Dichtung 27. Damit wird der Benutzer beim neuerlichen Schließen des Deckels 9 gezwungen, die Sicherungsvorrichtung 12 zumindest soweit in Richtung auf die Sperrstellung zu betätigen, bis die Dichtung 27 etwas zusammengedrückt und der Abstand zwischen den Widerlagern 15, 15′ soweit verkürzt ist, daß die Befestigungselemente 11 ordnungsgemäß eingeklinkt werden können. Es wird damit eine zwangsweise Schrittfolge beim Schließen des Deckels vorherbestimmt, durch die der Benutzer es nicht vergessen oder unterlassen kann, die Sicherungsvorrichtung 12 ordnungsgemäß zu betätigen. Ist das Anschlagelement 24 wieder auf der Fläche 32″ angelangt, kann der Benutzer, sofern dies notwendig ist, die Befestigungselemente 11 vollständig anziehen, bis das Anschlagelement 24 im Freistellungsabschnitt 36 sitzt. Dann ist für das neuerliche Öffnen des Deckels 9 wiederum eine vorbestimmte, zwangsweise Schrittfolge erforderlich, weil der Benutzer die Sicherungsvorrichtung 12 nicht betätigen kann, bevor er nicht die Befestigungselemente 11 gelöst hat. Damit ist sichergestellt, daß die Sicherungsvorrichtung 12 beim Öffnen des Deckels in einem letzten Schritt und beim Schließen des Deckels in einem ersten Schritt verstellt werden muß.

Fig. 5 zeigt in einer Abwicklung eine weitere Ausführungsform für das Gegenanschlagelement 23′, das im Unterschied zur Fig. 4 einen Unterdruck-Belüftabschnitt 38 aufweist, der bei Unterdruck im Behälter oder bei festgeklebter Dichtung 27 den Öffnungsvorgang vereinfacht. Der linke Teil des Gegenanschlagelementes 23′ (Verstellsperre) entspricht dem von Fig. 4. Die Führungskulisse wird jedoch an der der Fang- und Austrittsöffnung 34 abgewandten Seite durch den Unterdruck-Belüftabschnitt 38 fortgesetzt, der mit einer übergangslos aus dem Freistellungsabschnitt 36 herausführenden Schrägfläche 38′ zu einem Anschlag 39 verläuft. Die Fläche 32″ wird durch eine parallel zur Schrägfläche 38′ verlaufende Schrägfläche 40 verlängert. Ein Auslaß 41 ist für Verschmutzungen vorgesehen.

Bei der Ausführungsform gemäß Fig. 5 wirkt bei festgeklebtem Deckel 9 oder bei Unterdruck die Verstellsperre gegen die Bewegung des Handhebels 13 in Richtung zur Deckellösestellung (Anschlagfläche 33′). Wird der Handhebel 13 jedoch in der Gegenrichtung über die Sperrstellung hinaus verdreht, dann läuft die Schrägfläche 38′ auf dem Anschlagelement 24 auf und drückt den Deckel 9 gegen die Zugwirkung des Unterdrucks bzw. die Haftwirkung der festgeklebten Dichtung 27 nach oben, bis der Unterdruck abgebaut oder die Haftung beseitigt ist. Dann wird das Anschlagelement 24 am Anschlag 39 abgefangen und der Benutzer spürbar informiert, daß die Haftung der Dichtung 27 beseitigt bzw. der Unterdruck im Behälter ausgeglichen ist. Danach hat er den Handhebel 13 in der Gegenrichtung zu verdrehen, wobei das Anschlagelement 24 über die Flächen 40, 32″ läuft und schließlich über die Schrägfläche 35 den Deckel anhebt, bis es in der Öffnung 34 angelangt ist.

Das Anschlagelement 24 kann mit beliebigem Querschnitt, d.h. nicht nur rund, sondern auch quadratisch oder mit abgerundeten Ecken oder ähnlich ausgebildet sein. Ferner ist es möglich, entweder das Gegenschlagelement oder das Anschlagelement mit einer gleitfreudigen Beschichtung zu versehen, um die Reibung und den Verschleiß zu mindern.

Unterläßt es der Benutzer, als ersten Schritt beim Schließen des Deckels den Handhebel 13 in die Deckelsperrstellung zu verdrehen, weil er es mit anderen Mitteln schafft, die Befestigungselemente 11 anzuziehen, so wird aufgrund des Drucks des Deckels 9 beim Anziehen der Befestigungselemente 11 das Anschlagelement 24 entlang der Schrägfläche 35 bis in den Freistellungsabschnitt 36 wandern, bis die Sicherungsvorrichtung 12 ihre Deckelsperrstellung selbsttätig erreicht.

Denkbar ist es ferner, um den Umfang des Deckels 9 verteilt mehrere Sicherungsvorrichtungen 12 anzubringen und deren Handhebel 13 gegebenenfalls miteinander zu einer gemeinsamen Bewegung zu koppeln.

Eine weitere Möglichkeit besteht darin, die Flächen 35, 32, 38′, 32′, 32″ kurvenförmig auszubilden, damit die Anlüftbewegungen des Deckels 9 feinfühliger gesteuert werden, d.h. daß am Beginn der Anlüftbewegung nur ein sehr kleiner Spalt zum Druckausgleich geöffnet wird, ehe dann beim weiteren Verschwenken des Handhebels 13 die Öffnungsbewegung des Deckels 9 verstärkt wird. Das Anschlagelement 24 könnte auch als Rolle ausgebildet sein, die in der Führungskulisse leichtgängig abrollt. Aus Fig. 2 ist der Schutzbügel 43 zu entnehmen. Das Anschlagelement 24 könnte auch an der Innenseite des Schutzbügels 43 angebracht werden, damit die Sicherungsvorrichtung 12 in einem optimal großen Abstand vom Scharnier 10 am Deckel angreift.

Der Aufbau und die Funktion der Sicherungsvorrichtung 12 wurde nur beispielsweise beim Behälter 1 gemäß den Fig. 1 und 2 erläutert. Diese Art der Sicherung eines Behälterdeckels ist jedoch bei allen Behältern anwendbar, bei denen ein Überdruck oder ein Unterdruck im Behälter und ein Festkleben des Deckels auftreten können und bei denen es auf eine hohe Sicherheit für den Benutzer und für die Umwelt ankommt. Im besonderen gilt dies für alle Arten von Abfallstoff-Sammelbehälter, weil diese oftmals für jeden frei zugänglich sind und deshalb einer besonderen passiven Sicherheit bedürfen. Die beschriebene Sicherheitsvorrichtung 12 ermöglicht es schließlich, durch Anbringen eines Schlosses, z.B zwischen Handhebel 13 und dem Deckel 9 eine wirksame und einfache Sicherung zu schaffen.

**Ansprüche**

1. Behälter, insbesondere Abfallsammelbehälter für flüssige und teigige Abfallstoffe, mit wenigstens einem anhebbaren und durch wenigstens ein Verschlußelement elatisch andrückbaren Deckel (9) und mit wenigstens einer zwischen dem Deckel (9) und dem Behälter (1) zwischen einer Deckellöse- und einer Deckelsperrstellung verstellbaren Sicherungsvorrichtung (12) mit bei Betätigung relativ zueinander bewegbaren Anschlag- (24) und Gegenanschlagelementen (23, 23'), die eine Anlüftvorrichtung (Z) für den Deckel bilden, **dadurch gekennzeichnet, daß** die Anlüftvorrichtung (Z) eine bei Unterdruck im Behälter (1) die Bewegung der Sicherungsvorrichtung (12) in die Deckellösestellung sperrende Verstellsperre (33', 32') aufweist und daß zum Lösen der Verstellsperre eine Belüftungseinrichtung (38' ; 29) vorgesehen ist.

2. Behälter nach Anspruch 1, bei dem zwischen dem Deckel und einem Dichtsitz des Behälters eine mittels des Befestigungselementes (11) und/oder aufgrund Unterdrucks im Behälter über den Deckel zusammendrückbare Dichtung vorgesehen ist, **dadurch gekennzeichnet, daß** die Verstellsperre (33', 32') bei mittels des Befestigungselements (11) oder aufgrund Unterdrucks im Behälter (1) zusammengedrückter Dichtung (27) in Eingriff ist.

3. Behälter nach den Ansprüchen 1 und 2 , **dadurch gekennzeichnet, daß** die Verstellsperre (33', 32') durch die ineinandergreifenden Anschlag- (24) und Gegenanschlagelemente (23, 23') gebildet ist.

4. Behälter nach den Ansprüchen 1 bis 3, **dadurch gekennzeichnet, daß** das Anschlagelement (24) ein Vorsprung und das Gegenanschlagelement (23, 23') eine den Vorsprung über einen Anlüfthub beim öffnen des Deckels (9) zwischen quer zur öffnungsrichtung des Deckels ausgerichteten Führungsflächen (33, 37) einschließende Führungs-Kulisse ist, daß entweder der Vorsprung oder die Führungskulisse am Deckel (9) angebracht ist, und daß entweder der Vorsprung oder die Führungskulisse quer zur öffnungsrichtung des Deckels (9) bewegbar ist.

5. Behälter nach Anspruch 4, **dadurch gekennzeichnet, daß** die Führungskulisse (23, 23') einen parallel zur öffnungsrichtung des Deckels (9) verlaufenden, eine Anschlagfläche (33') aufweisenden Freistellungsabschnitt (36) für den Vorsprung aufweist, der in der Sperrstellung der Sicherungsvorrichtung (12) mit dem Vorsprung fluchtet.

6. Behälter nach den Ansprüchen 1 bis 5, **dadurch gekennzeichnet, daß** die Belüftungseinrichtung einen an der einer Austritts- und Fangöffnung (34) für den Vorsprung (24) abgewandten Seite der Führungskulisse sich an den Freistellungsabschnitt (36) anschließenden ersten schrägen Unterdruck-Belüftabschnitt (38) aufweist, in den der Vorsprung bei einer Verstellung der Sicherungsvorrichtung (12) über die Sperrstellung hinaus unter Anlüften des Deckels (9) gegen die Unterdruckhaltekraft eingreift.

7. Behälter nach den Ansprüchen 4 bis 6, **dadurch gekennzeichnet, daß** die Führungskulisse zwischen der Fang- und Austrittsöffnung (34) und dem Freistellungsabschnitt (36) einen zweiten schrägen Abschnitt als Überdruck-Anlüftabschnitt (42, 42') aufweist.

8. Behälter nach den Ansprüchen 4 bis 7, **dadurch gekennzeichnet, daß** die Führungskulisse an einem einen Handhebel (13) tragenden Drehteil angebracht ist, der am Deckel (9) um eine zur Deckelachse annähernd parallele Achse (21) drehbar gelagert ist, und daß die Führungskulisse durch gewindegangartige Rippel (25, 26, 25', 26') auf dem als Welle ausgebildeten Drehteil (20) gebildet ist.

9. Behälter nach Anspruch 4, **dadurch gekennzeichnet, daß** die Führungskulisse in einem, vorzugsweise zylindrischen, Dreh-, Schmiede- oder Gußteil als im Querschnitt U-förmige Nut ausgebildet ist, und daß der Dreh-, Schmiede- oder Gußteil am Drehteil (20) befestigt, vorzugsweise einstückig mit diesem ausgebildet, ist.

10. Behälter nach den Ansprüchen 1 bis 3, **dadurch gekennzeichnet, daß** die Belüftungseinrichtung (29) ein manuell betätigbares Belüftungsventil im Deckel (9), am Deckeldom (8) oder am Behälter (1) ist.

11. Behälter nach Anspruch 8, wobei der Deckel ein runder oder ovaler Domdeckel ist, der an einem kragenartigen Domflansch mittels des Scharniers hochklappbar angebracht ist, **dadurch gekennzeichnet, daß** der dem Scharnier (10) annähernd diametral gegenüberliegende Drehteil (20) außen am Deckelrand vorbeigreift, und daß der Vorsprung außen am Domflansch (8) oder in einem am Domflansch (8) angebrachten Schutzbügel (43) innenseitig angebracht ist.

12. Behälter nach Anspruch 8, wobei der Deckel ein runder oder ovaler oder eckiger Domdeckel ist, der an einem kragenartigen Domflansch mittels des Scharniers hochklappbar angebracht ist, **dadurch gekennzeichnet, daß** der Drehteil dem Scharnier (10) gegenüberliegend den Deckel (9) in einem Abstand vom Deckelrand innen durchsetzt, und daß der Vorsprung an der Innenseite des Behälters bzw. Domflansches (8) angeordnet ist.

13. Behälter nach einem der Ansprüche 1 bis 12, **dadurch gekennzeichnet, daß** zumindest für die Sperrstellung der Sicherungsvorrichtung (12) eine Federverrastung (22), vorzugsweise für den oder im Handhebel (13), vorgesehen ist.

14. Behälter nach einem der Ansprüche 1 bis 13, **dadurch gekennzeichnet, daß** der Deckel (9) durch eine den Öffnungs- und/oder Schließhub unterstützende und gegebenenfalls dämpfende Servoeinrichtung (44) beaufschlagt ist.

15. Behälter nach den vorhergehenden Ansprüchen, wobei der Deckel (9) mit einem Scharnier (10) angeschlagen und jedes Befestigungselement (11) eine Knebelschraube ist, die an behälter- und deckelfesten Widerlagern angreift und zum weiten Öffnen des Deckels von einem Widerlager abklappbar ist, **dadurch gekennzeichnet, daß** die Wirklänge jeder Knebelschraube kürzer als der Abstand zwischen den Widerlagern (15, 15') bei entspannter Dichtung (27) ist, und daß die Anschlag- (24) und Gegenanschlagelement (23, 23') in der Lösestellung der Sicherungsvorrichtung (12) und bei entspannter Dichtung (27) derart in gegenseitigem Eingriff stehen, daß bei Verstellung der Sicherungsvorrichtung (12) in die Deckelsperrstellung mittels der Anschlag- und Gegenanschlagelemente und des Scharniers (10) der Deckel (9) gegen den Dichtsitz bewegbar und der Abstand der Widerlager (15, 15') bis mindestens auf die Wirklänge der Befestigungselemente (11) verkürzbar ist.

## Claims

1. A container, in particular a refuse collection container, for liquid and pasty waste substances with at least one liftable lid (9) that can be elastically applied by means of at least one closing element, and with at least one safety device (12) between the lid (9) and the container (1) adjustable between the lid releasing position and a lid locking position, with bearing elements (24) and counterbearing elements (23, 23') movable relative to each other during operation which form a lifting device (Z) for the lid, characterized in that the lifting device (Z) has a displacement locking means (33', 32') which in the presence of low pressure in the container (1) blocks the movement of the safety device (12) into the lid releasing position, and in that provision is made for a ventilation device (38'; 29) for releasing the displacement locking means.

2. A container according to claim 1 wherein provision is made between the lid and a sealing seat of the container for a gasket compressible via the lid by means of the fastening element (11) and/or because of low pressure in the container, characterized in that the displacement locking means (33', 32') is engaged, with the gasket (27) being compressed by means of the fastening element (11) or because of low pressure in the container (1).

3. A container according to claims 1 and 2, characterized in that the displacement locking means (33', 32') is formed by the inter-engaging bearing elements (24) and the counterbearing elements (23, 23').

4. A container according to claims 1 to 3, characterized in that the bearing element (24) is a projection and the counterbearing element (23, 23') is a guide member enclosing the projection, during a lifting movement as the lid (9) is being opened, between guide surfaces (33, 37) orientated transversely to the opening direction of the lid, in that either the projection or the guide member is fixed to the lid (9) and in that either the projection or the guide member is movable transversely to the opening direction of the lid(9).

5. A container according to claim 4, characterized in that the guide member (23, 23') has a releasing sector (36) for the projection, extending parallel to the opening direction of the lid (9) and having a bearing surface (33'), which sector is aligned with the projection in the locking position of the safety device (12).

6. A container according to claims 1 to 5, characterized in that the ventilation device has, on the side of the guide member remote from the exit and receiving opening (34) for the projection (24), a first slanting low pressure ventilating sector (38) following the releasing sector (36), in which opening the projection engages when the safety device (12) is displaced beyond the locking position with the lid being lifted against the force of the low pressure.

7. A container according to claims 4 to 6, characterized in that the guide member has, between the exit and receiving opening (34) and the releasing sector (36), a second slanting sector as a high pressure lifting sector, (42, 42').

8. A container according to claims 4 to 7, characterized in that the guide member is fixed on a rotary component carrying a hand lever (13), which rotary component is mounted for rotation round an axis (21) approximately parallel to the lid axis, and in that the guide member is formed by thread-type indentations (25, 26, 25', 26') on the rotary component (20) designed as a shaft.

9. A container according to claim 4, characterized in that the guide member is formed in a preferably cylindrical turned, forged or cast part as a groove that is channel-shaped in cross section and in that the turned, forged or cast part is fixed to the rotary component (20), being preferably integral therewith.

10. A container according to claims 1 to 3, characterized in that the ventilation device (29) is a manually actuable ventilation valve in the lid (9) on the lid dome (8) or on the container (1).

11. A container according to claim 8, wherein the lid is a round or oval domed lid mounted on a collar type dome flange capable of being opened up by means of the hinge, characterized in that the rotary component (20) disposed approximately diametrically opposite the hinge (10) extends on the outside past the lid edge and in that the projection is arranged on the outside on the dome flange (8) or on the inside in a protective bracket (43).

12. A container according to claim 8, wherein the lid is a round or oval or angular domed lid mounted on a collar-type dome flange capable of being opened up by means of the hinge, characterized in that the rotary component passes on the opposite side to the hinge (10) through the lid (9) on the inside at a distance from the lid edge, and in that the projection is arranged on the inside of the container or the dome flange (8).

13. A container according to one of claims 1 to 12, characterized in that at least for the locking position of the safety device (12), provision is made For an elastic engagement (22), preferably for the hand lever (13) or arranged therein.

14. A container according to one of claims 1 to 13, characterized in that the lid (9) is acted on by a servomechanism (44) promoting and, if required, damping the opening or closing movement.

15. A container according to the preceding claims wherein the lid (9) is fitted with a hinge (10) and each fastening element (11) is a tommy screw engaging in supports fixed to the container and lid and which may be swung away from a support for the wide opening of the lid, characterized in that the effective length of each tommy screw is shorter than the distance between the support (15, 15') when the gasket (27) is relaxed, and in that the bearing elements (24) and the counterbearing elements (23, 23') are inter-engaged in the released position of the safety device (12) and when the gasket (27) is relaxed in such a way that when the safety device (12) is displaced into its position locking the lid by means of the bearing and counterbearing elements and the hinge, the lid (9) can be moved against the sealing seat, and the distance between the supports (15, 15') can be shortened to at least the effective length of the fastening elements (11).

## Revendications

1. Récipient, en particulier réservoir de collecte de déchets pour des matières de déchet liquides et pâteuses, avec au moins un couvercle (9) soulevable et appuyable élastiquement par au moins un élément de fermeture et avec au moins un dispositif de sécurité (12) entre le couvercle (9) et le récipient (1), déplaçable entre une position de détachement de couvercle et une position de blocage de couvercle et à éléments de butée (24) et de contre-butée (23, 23') relativement mobiles les uns par rapport aux autres, qui constituent un dispositif d'amorçage d'aération (Z) pour le couvercle, caractérisé en ce que le dispositif d'amorçage d'aération (Z) comporte un moyen de blocage de déplacement (33', 32') bloquant le mouvement du dispositif de sécurité (12) dans la position de détachement de couvercle en cas de dépression dans le récipient (1) et en ce qu'un système d'aération (38' ; 29) est prévu pour le déblocage du moyen de blocage de déplacement.

2. Récipient selon la revendication 1, dans lequel une garniture de joint d'étanchéité, compressible par l'intermédiaire du couvercle au moyen de l'élément de fixation (11) et/ou en raison de la dépression dans le récipient, est prévue entre le couvercle et un siège d'étanchéité du récipient, caractérisé en ce que le moyen de blocage de déplacement (33', 33") est en prise dans le cas de la garniture de joint d'étanchéité (27) comprimée au moyen de l'élément de fixation (11) ou en raison de la dépression dans le récipient (1).

3. Récipient selon les revendications 1 et 2, caractérisé en ce que le moyen de blocage de déplacement (33', 32') est constitué par les éléments respectivement de butée (24) et de contre-butée (23, 23') pénétrant l'un dans l'autre.

4. Récipient selon les revendications 1 à 3, caractérisé en ce que l'élément de butée (24) est une saillie et l'élément de contre-butée (23, 23') est une coulisse de guidage incluant la saillie par l'intermédiaire d'une course de levée d'amorçage d'aération lors de l'ouverture du couvercle (9) entre des surfaces de guidage (33, 37) orientées transversalement à la direction d'ouverture du couvercle, en ce que soit la saillie ou la coulisse de guidage est montée sur le couvercle (9) et en ce que soit la saillie ou la coulisse de guidage est mobile transversalement à la direction d'ouverture du couvercle (9).

5. Récipient selon la revendication 4, caractérisé en ce que la coulisse de guidage (23, 23') comporte, pour la saillie, une portion de libération (36) s'étendant parallèlement à la direction d'ouverture du couvercle (9) et comportant une surface de butée (33'), laquelle portion est alignée avec la saillie dans la position de blocage du dispositif de sécurité (12).

6. Récipient selon les revendications 1 à 5, caractérisé en ce que le système d'aération comporte une première portion inclinée de dépression-aération (38) se raccordant à la portion de libération (36) du côté de la coulisse de guidage opposé à un orifice de sortie et de captage (34) pour la saillie (24), dans laquelle portion la saillie pénètre lors d'un déplacement du dispositif de sécurité (12) au-delà de la position de blocage avec amorçage d'aération du couvercle (9) à l'encontre de la force de retenue par dépression.

7. Récipient selon les revendications 4 à 6, caractérisé en ce que la coulisse de guidage comporte, entre l'orifice de captage et de sortie (34) et la portion de libération (36), une seconde portion inclinée formant portion de dépression/amorçage d'aération (42, 42').

8. Récipient selon les revendications 4 à 7, caractérisé en ce que la coulisse de guidage est montée sur un élément rotatif portant un levier manuel (13), lequel élément rotatif est monté sur le couvercle (9) de façon à pouvoir tourner autour d'un axe approximativement parallèle à l'axe du couvercle et en ce que la coulisse de guidage est constituée par des nervures formant spires de filetage (25, 26, 25', 26') sur l'élément rotatif (20) réalisé sous forme d'arbre.

9. Récipient selon la revendication 4, caractérisé en ce que la coulisse de guidage est réalisée sous forme de rainure en forme de U en section transversale dans une pièce tournée, forgée ou moulée de préférence cylindrique et en ce que la pièce tournée, forgée ou moulée est réalisée de façon à être fixée à l'élément rotatif (20) en étant de préférence réalisée en une seule pièce avec celui-ci

10. Récipient selon les revendications 1 à 3, caractérisé en ce que le système d'aération (29) est une soupape d'aération manuellement manoeuvrable dans le couvercle (9), sur le dôme de couvercle (8) ou sur le récipient (1).

11. Récipient selon la revendication 8, dans lequel le couvercle est un couvercle à dôme rond ou oval qui est monté de façon rabattable vers le haut au moyen de la charnière sur un rebord de dôme en forme de collerette, caractérisé en ce que l'élément rotatif (20), approximativement diamétralement opposé à la charnière (10), passe extérieurement sur le côté du couvercle et en ce que la saillie est rapportée extérieurement sur le rebord de dôme (8) ou du côté intérieur dans un étrier de protection (43) rapporté sur le rebord de dôme (8).

12. Récipient selon la revendication 8, dans lequel le couvercle est un couvercle à dôme rond ou oval ou polygonal qui est rapporté de façon rabattable vers le haut au moyen de la charnière sur un rebord de dôme en forme de collerette, caractérisé en ce que l'élément rotatif, placé à l'opposé de la charnière (10), travers le couvercle (9) à une certaine distance d'écartement du bord du couvercle et en ce que la saillie est disposée sur le côté intérieur du récipient ou du rebord de dôme (8).

13. Récipient selon l'une des revendications 1 à 12, caractérisé en ce qu'un dispositif d'encliquetage à ressort (22) est prévu de préférence pour ou dans le levier manuel (13) au moins pour la position de blocage du dispositif de sécurité (12).

14. Récipient selon l'une des revendications 1 à 13, caractérisé en ce que le couvercle (9) est sollicité par un servo-système (44) assistant et éventuellement amortissant la course d'ouverture et/ou de fermeture.

15. Récipient selon les revendications précédentes, dans lequel le couvercle (9) est garni d'une charnière (10) et chaque élément de fixation (11) est une vis à garret qui s'accroche à des contre-butées solidaires du récipient et du couvercle et est rabattable à l'écart d'une contre-butée pour l'ouverture large du couvercle, caractérisé en ce que la longueur efficace de chaque vis à garret est plus courte que l'intervalle d'écartement entre les contre-butées (15, 15') à l'état détendu de la garniture de joint d'étanchéité (27) et en ce que les éléments de butée (24) et de contre-butée (23, 23') sont en prise réciproque de telle façon, dans la position de détachement du dispositif de sécurité (12) et à l'état détendu de la garniture de joint d'étanchéité (27), qu'en cas de déplacement du dispositif de sécurité (12) dans la position de blocage de couvercle au moyen des éléments de butée et de contre-butée et de la charnière (10), le couvercle (9) est déplaçable vers le siège d'étanchéité et la distance d'espacement des contre-butées (15, 15') est raccourcissable au moins jusqu'à la longueur efficace des éléments de fixation (11).

_FIG1_

_FIG2_

FIG 3

FIG 4

FIG 5